# EUROPEAN PATENT APPLICATION

(11) **EP 2 741 155 A2**
(43) Date of publication of application: **11.06.2014**
(21) Application number: 13192058.9
(22) Date of filing: 08.11.2013
(51) Int. Cl.: G05B 19/409

(54) **Display system for machine using portable display device**

(30) Priority: 04.12.2012 JP 2012265423
(71) Applicant: FANUC CORPORATION, Oshino-mura Minamitsuru-gun Yamanashi 401-0597 (JP)
(72) Inventor: Suzuki, Koji, Minamitsuru-gun, Yamanashi 401-0597 (JP); Uchida, Hiroyuki, Minamitsuru-gun, Yamanashi 401-0597 (JP)
(74) Representative: Ward, James Norman

(57) **Abstract**

A plurality of machines are controlled by respective corresponding numerical controllers. One portable display device is enabled to be connected to one numerical controller selected from the plurality of numerical controllers. The numerical controller which has been selected generates display data by display software in the numerical controller, based on a key operation performed at the portable display device that is connected to the numerical controller. The portable display device receives the display data generated by the numerical controller, and displays the data on its display.

## Description

### BACKGROUND OF THE INVENTION

### Field of the Invention

The present invention relates to a display system for a machine, the display system allowing a portable display device to be used as a display device for a plurality of machines.

### Description of the Related Art

For a plurality of machines, a numerical controller for controlling the machine is incorporated in each of the machines. The numerical controllers provided on the machines each include a display device for displaying a result of setting working conditions, a result of working and the like.

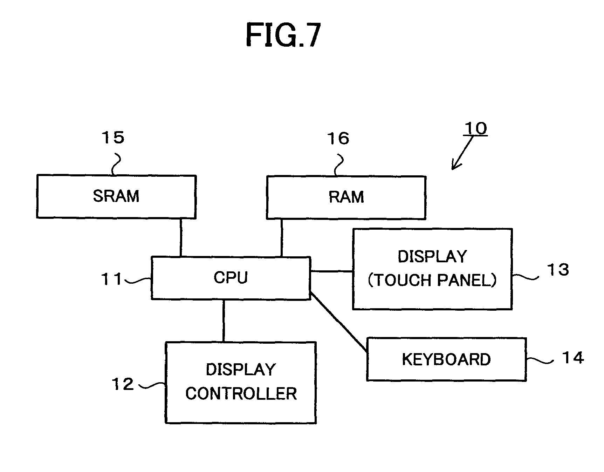

FIG. 7 is a diagram for describing a numerical controller including a display device for controlling a conventional working machine.

In order to control driving of a machine main body such as a wire electric discharge machine main body to work on a workpiece, a numerical controller 10 includes a processor (CPU) 11, a display controller 12, a display 13 with a touch panel, a keyboard 14 for data input, an SRAM 15 for storing a machining program and various types of setting data, and a RAM 16 for temporarily storing data. Additionally, soft keys may be displayed on the display 13 with a touch panel, or a reader/writer for a storage such as a memory card may be provided on the numerical controller 10.

Generally, wire electric discharge machines machine a workpiece automatically and the working time is long, and thus, during machining, an operator rarely has to check the display contents displayed on the display screen of a display device provided on a numerical controller that controls driving of the wire electric discharge machine. Accordingly, the time taken to use or check the display device by the operator is short. In the same manner, the time taken to use an input device such as a touch panel is also short.

Accordingly, it is conceivable to detachably attach the display device, which is rarely used, to a wire electric discharge machine, and a controller or monitor device to which a display is detachably attached is disclosed in Japanese Patent Application Laid-Open No. 2011-255472.

According to the technique disclosed in Japanese Patent Application Laid-Open No. 2011-255472 mentioned above, since a display device to be connected to a working device is to be identified by a machine-specific address, there is a problem of incapability of using a detached monitor device as the display device for another working device. Also, with respect to the display device of a numerical controller, since display software is incorporated in the display device, there is a problem of incapability of using a detached display device as the display device for other types of working devices.

### SUMMARY OF THE INVENTION

Accordingly, in view of the problems of the conventional technique described above, it is an object of the present to provide a display system for a machine, in which means for connecting a portable display device as a display device for a numerical controller is provided, display data is generated by display software inside the numerical controller, and the portable display device receives, and displays, the display data generated by the numerical controller.

A display system for a machine according to the present invention includes at least one machine, a controller provided on each of the at least one machine, and one portable display device capable of being connected to the controllers, and displays display data generated by each controller, by using the portable display device. In the display system for a machine, the portable display device includes a selection unit for selecting, from the respective controllers provided on the at least one machine, a controller for controlling each of one or more machines to be connected, and a transmission unit for transmitting a connection request signal to the controller selected by the selection unit. For its part, each controller provided on the machine includes a permission signal transmission unit for receiving the connection request signal and transmitting a permission signal for permitting connection of the portable display device, a display data generation unit for generating the display data to be displayed by the portable display device, and a display data transmission unit for transmitting the display data to the portable display device. Moreover, the display data generated by the controller selected by the selection unit of the portable display device is displayed on a display of the portable display device.

The display system for a machine may further include an operation input information transmission unit for transmitting an information signal operated or input by a touch panel or an operation key of the portable display device, wherein the controller may include a reception unit for receiving a signal from the operation input information transmission unit, and may control the machine based on the signal received by the reception unit.

The portable display device may include an interface for connecting an external storage unit.

The portable display device and the controllers may exchange the connection request signal by wireless, the permission signal, the display data, and information stored in the external storage unit.

The portable display device may be a tablet terminal.

The machine may be any one of an electric discharge machine, an injection molding machine, and a working machine.

According to the present invention, a display system for a machine can be provided, in which means for connecting a portable display device as a display device for a numerical controller is provided, display data is generated by display software inside the numerical controller, and the portable display device receives, and displays, the display data generated by the numerical controller.

### BRIEF DESCRIPTION OF THE DRAWINGS

The above-described and other objects and features of the present invention will become clear from the description of the following examples given with reference to the appended drawings. Among these drawings:
FIG. 1 is a diagram for describing an outline of an embodiment of a display system for a machine according to the present invention;
FIG. 2 is a diagram for schematically describing a portable display device configuring a display system for a machine according to the present invention;
FIG. 3 is a flow chart for describing a process to be performed by a numerical controller configuring a display system for a machine according to the present invention;
FIG. 4 is a flow chart for describing server processing for a numerical controller, shown in FIG. 3;
FIG. 5 is a flow chart for describing a process to be performed by a display device configuring a display system according to the present invention;
FIG. 6 is a flow chart for describing the process to be performed by the display device, shown in FIG. 5; and
FIG. 7 is a diagram for describing a numerical controller for controlling a conventional working machine, in which a display device is included.

### DETAILED DESCRIPTION OF THE PREFERRED EMBODIMENTS

The present invention relates to a display system for a machine, in which means for connecting a portable display device as a display device for a numerical controller is provided, display data is generated by display software inside the numerical controller, and the display device receives, and displays, the display data generated by the numerical controller.

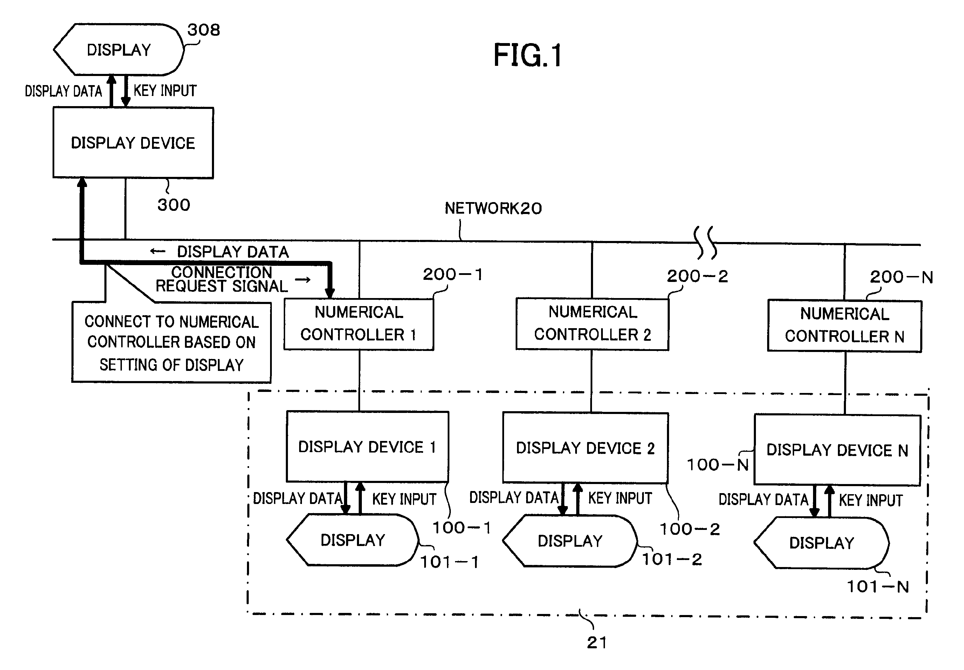

FIG. 1 is a diagram for describing an outline of an embodiment of a display system for a machine according to the present invention. Additionally, the machine described below is any one of an electric discharge machine such as a wire electric discharge machine, an injection molding machine, and a machine tool such as a multi-axis working machine.

The display system for a machine according to the present invention shown in FIG. 1 is configured from a portable display device 300, and N numerical controllers 200-1, 200-2, ..., 200-N that are connected to the display device via a network 20 such as Ethernet (registered trademark). Each of the numerical controllers 200-1, 200-2, ..., 200-N controls a machine (not shown). Additionally, in the display system for a machine, the connection means between the portable display device 300 and the N numerical controllers is not restricted to a LAN connection such as Ethernet (registered trademark) mentioned above, and wireless connection may also be used instead.

Each of the N numerical controllers 200-1, ..., 200-N and the display device 300 has an address for connection (hereinafter referred to as a "network address"). That is, a network address for connection is stored in a memory provided on each of the N numerical controllers 200-1, ..., 200-N and the display device 300. Thus, one or more numerical controllers and one or more display devices can be connected. As the portable display device 300, a tablet terminal or the like that is in the market may be used.

As indicated by the reference numeral 21, a display device 100-1 is connected to the numerical controller 200-1, a display device 100-2 is connected to the numerical controller 200-2, ..., and a display device 100-N is connected to the numerical controller 200-N. The display devices 100-1, ..., 100-N include displays 101-1, ..., 101-N such as LCDs, respectively. However, the display devices 100-1 to 100-N are not structures that are indispensable to the display system for a machine of the present invention.

As shown in the example in FIG. 1, a connection request signal is transmitted from the display device 300 to the numerical controller 200-1 which has been selected for connection by using the portable display device 300. Then, the numerical controller 200-1 which has received the connection request signal from the portable display device 300 generates display data by display software inside the numerical controller 200-1, and transmits the generated display data to the display device 300 via the network 20 so as to have the display data displayed on a display 308 of the display device 300.

Here, an outline of the operation of the display system for a machine described above will be described.

The numerical controller 200-i (i = 1 to N) waits until a connection request is received from the portable display device 300. In order to connect the display device 300 to the numerical controller 200-i, the network address of the numerical controller 200-i selected to connect is input to the display device 300, and the numerical controller 200 selected to connect by the display device 300 is identified. Then, the display device 300 issues a connection request to the numerical controller 200-i having the network address which has been input. Then, the numerical controller 200-i which has received the connection request signal from the display device 300 permits connection of the display device 300, and notifies the display device 300 of permission of connection (a connection request permission signal).

When the connection request permission signal is received from the numerical controller 200-i, the display device 300 establishes the connection between the display device 300 and the numerical controller 200-i. After the connection has been established, the portable display device 300 receives display data (screen data) generated by the numerical controller 200-i and displays the same on the display 308. Also, operation information such as key input at the display device 300 is transmitted from the display device 300 to the numerical controller 200-i via the network. The numerical controller 200-i which has received the operation information from the display device 300 performs a process in the same manner as with an existing input process (that is, in the same manner as in the case of process of input to the numerical controller 200-i by means of a dedicated display 101-i). Additionally, the numerical controller 200-i may determine, when the connection request signal is received from the display device 300, whether or not to permit connection, and may reject connection. In this case, the number of display devices 300 to be connected to the numerical controller at the same time may be restricted.

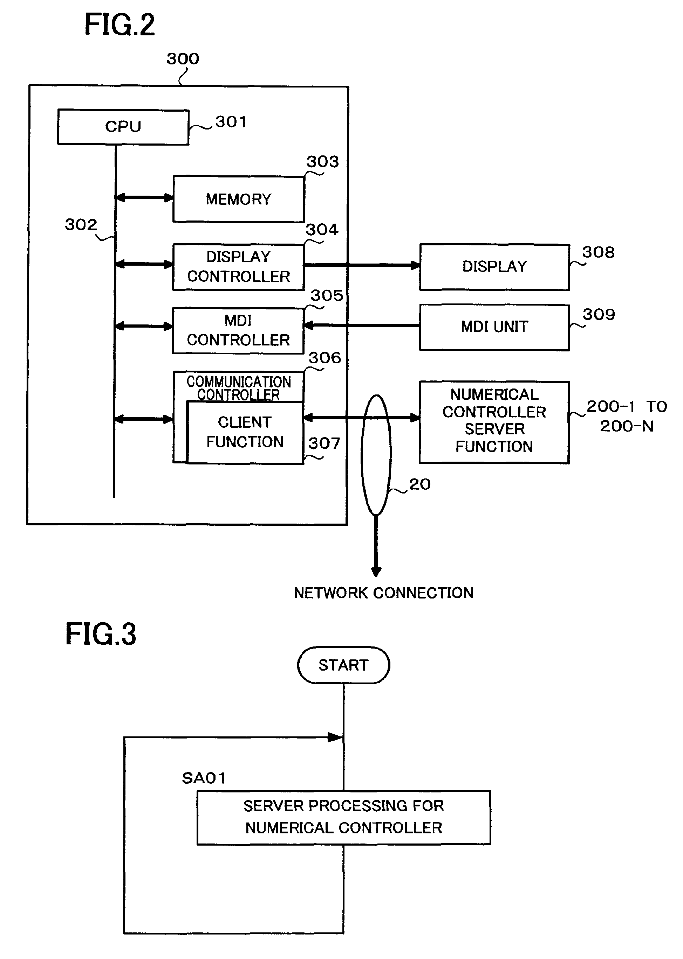

FIG. 2 is a diagram for schematically describing the portable display device configuring the display system for a machine according to the present invention.

A processor (CPU) 301 is a processor for controlling the portable display device 300 in an overall manner, and reads a system program stored in a memory 303 via a bus 302, and controls the display device 300 according to the system program in an overall manner. Also, a display controller 304, an MDI controller 305, and a communication controller 306 are connected to the processor 301 via the bus 302. The memory 303 includes an area where temporal computational data, a display command and the like are to be stored.

The display controller 304 transmits display data to the display 308. A manual data input controller (MDI controller) 305 controls an MDI unit 309, which is a manual data input device. The communication controller 306 has a client function 307 for connecting the numerical controller 200-i having a server function, selected by the display device 300, and the display device 300 via the network. In the case where a storage for a touch panel, a memory card, or the like is incorporated in the display device 300, the storage may be used as a storage for a touch panel, a memory card, or the like incorporated in the numerical controller 200-i via the network 20.

In the following, processes to be performed by the portable display device and the numerical controller used in the display system for a machine according to the present invention will be described with reference to FIGS. 3 to 6.

FIG. 3 is a flow chart for describing a process to be performed by the numerical controller configuring the display system for a machine according to the present invention.

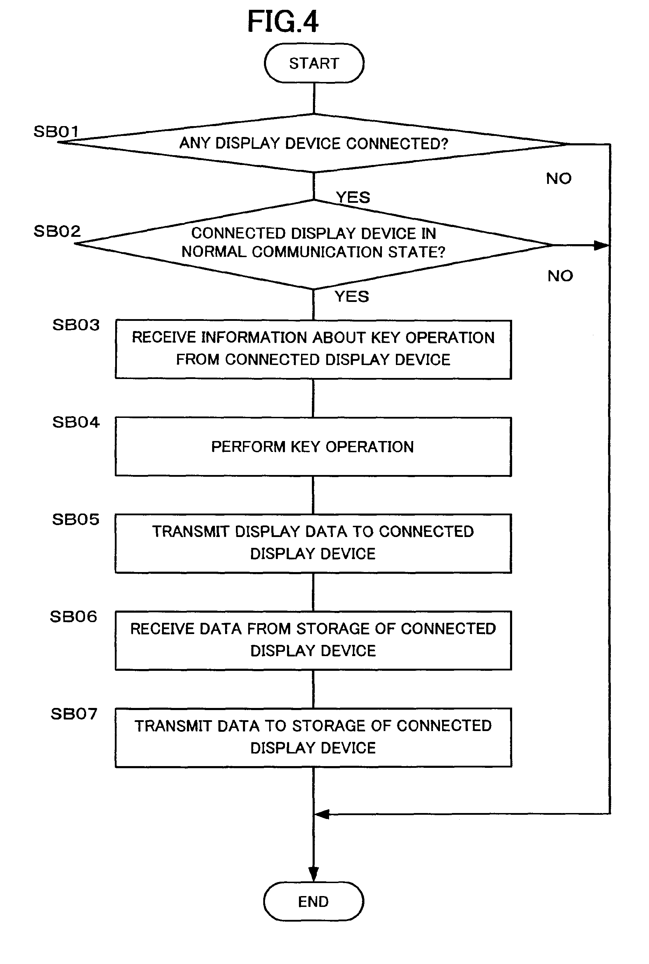

The numerical controllers 201-1 to 200-N perform server processing for a numerical controller (step SA01) at a predetermined cycle. The server processing for a numerical controller in step SA01 will be described with reference to FIG. 4.

FIG. 4 is a flow chart for describing the server processing for a numerical controller (FIG. 3) to be performed by the numerical controllers 201-1 to 200-N. In the following, description will be given along the steps.
(Step SB01) The numerical controllers 201-1 to 200-N each check whether there is a connection request signal from the portable display device 300 to thereby determine whether the portable display device 300 is connected or not. Then, in the case where there is one or more numerical controllers that are connected to the display device 300 (YES), the process proceeds to step SB02, and in the case where there is no numerical controller that is connected to the display device 300 (NO), the process is ended.
(Step SB02) The numerical controller 200-i determines whether the portable display device 300 connected to the numerical controller is in a normal communication state or not, and proceeds to step SB03 if determined in a normal communication state (YES), or ends the process if determined not in a normal communication state (NO).
(Step SB03) The numerical controller 200-i connected to the display device 300 receives information about a key operation from the display device 300.
(Step SB04) A key operation for performing input to the numerical controller 200-i connected to the display device 300 is performed using the display device 300. This key operation at the display device 300 is the same as the conventional key operation that is performed by the numerical controller 200-i when a key operation is performed using a touch key attached to the numerical controller 200-i.
(Step SB05) The numerical controller 200-i that is connected to the display device 300 generates display data according to the key operation in step SB04, and transmits the generated display data to the display device 300. Additionally, the display software of the numerical controller 200-i is used for the generation of the display data by the numerical controller 200-i.
(Step SB06) The numerical controller 200-i receives data from the storage of the display device 300 that is connected to the numerical controller 200-i.
(Step SB07) The numerical controller 200-i transmits data to the storage of the display device 300 that is connected to the numerical controller 200-i, and ends the process.

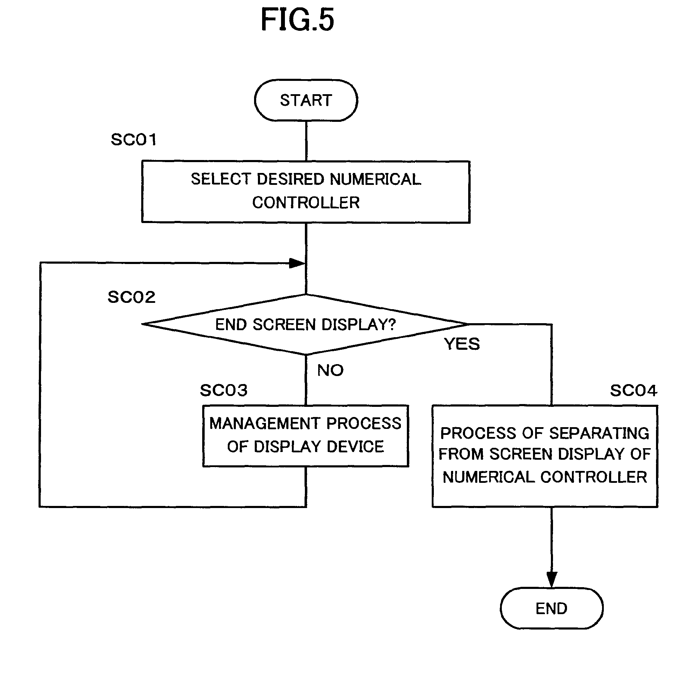

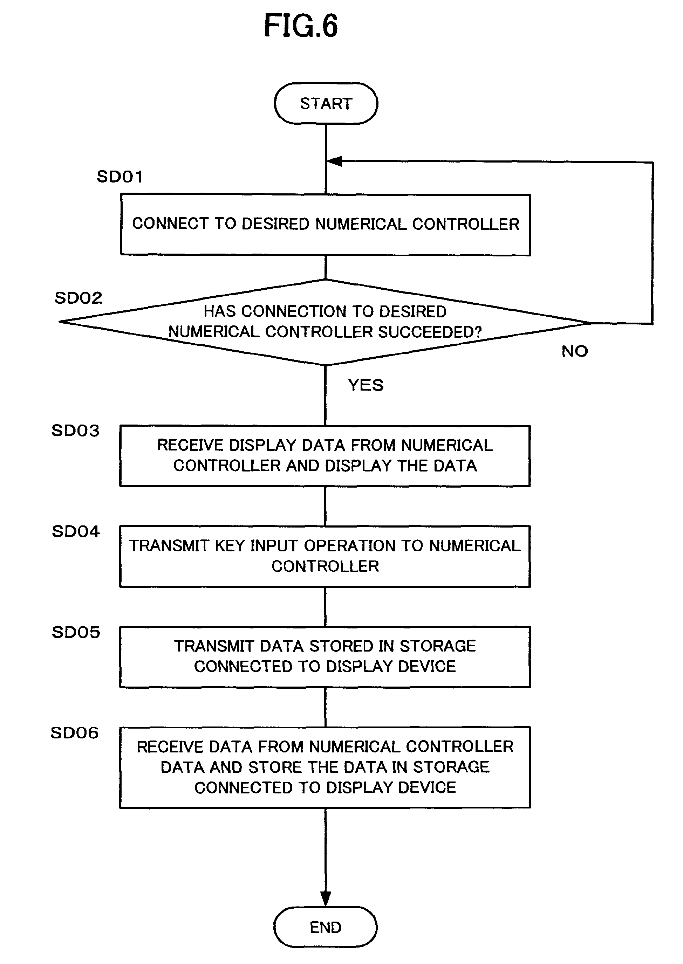

FIG. 5 is a flow chart for describing a process to be performed by the portable display device configuring the display system according to the present invention.
(Step SC01) The portable display device 300 selects a desired numerical controller 200-i. Specifically, in the case of connecting the display device 300 to any one of N numerical controllers 200-1, ..., 200-N, the numerical controller to which the display device 300 is connected is identified by inputting, by the display device 300, the network address of the numerical controller 200-i to which the display device 300 is desired to be connected.
(Step SC02) The display device 300 determines whether to end screen display or not, and proceeds to step SC04 in the case of ending the display (YES), and proceeds to step SC03 in the case of not ending the display (NO).
(Step SC03) The display device 300 performs its own management process, and returns to step SC02. The management process by the display device 300 will be described with reference to FIG. 6.
(Step SC04) The display device 300 performs a process of separating from the screen display of the numerical controller 200-i, and ends the process.

FIG. 6 is a flow chart for describing the management process, shown in FIG. 5, to be performed by the display device.

In the following, description will be given along the steps.
(Step SD01) The display device 300 connects to the numerical controller 200-i having the network address selected by an operator at the display device 300, among N numerical controllers 201-1 to 200-N. In the example in FIG. 1, the display device 300 connects to the numerical controller 200-1 having a network address corresponding to the numerical controller 200-1.
(Step SD02) The display device 300 determines whether connection to the desired numerical controller 200-i has succeeded or not, and proceeds to step SD03 in the case of success (YES), and returns to step SD01 in the case of failure (NO).
(Step SD03) The display device 300 receives display data from the numerical controller 200-i, and displays the same on the display 308.
(Step SD04) The display device 300 transmits a key input operation at the display device 300 to the numerical controller 200-i.
(Step SD05) The display device 300 transmits data stored in a storage connected to the display device 300 to the numerical controller 200-i.
(Step SD06) The display device 300 receives data from the numerical controller 200-i, stores the data in the storage connected to the display device 300, and ends the process.

As described above, according to the display system for a machine according to the present invention, one portable display device may be used as a display device for a plurality of machines. Also, the touch panel and the storage, incorporated in the portable display device, may be used as the touch panel and the storage of the numerical controller for controlling each machine. Thus, a setting operation for a plurality of machines may be performed using one portable display device. Also, the storage for a memory card or the like connected to the portable display device may be shared and used by a plurality of numerical controllers for controlling a plurality of machines.

## Claims

1. A display system for a machine, which comprises at least one machine, a controller provided on each machine, and one portable display device capable of being connected to the controllers, and displays, by using the portable display device, display data generated by each controller,
wherein the portable display device includes:
a selection unit for selecting, from the respective controllers provided on the at least one machine, a controller for controlling each of one or more machines to be connected; and
a transmission unit for transmitting a connection request signal to the controller selected by the selection unit,
wherein each controller provided on the machine includes:
a permission signal transmission unit for receiving the connection request signal and transmitting a permission signal for permitting connection of the portable display device;
a display data generation unit for generating the display data to be displayed by the portable display device; and
a display data transmission unit for transmitting the display data to the portable display device, and
wherein the display data generated by the controller selected by the selection unit of the portable display device is displayed on a display of the portable display device.

2. The display system for a machine according to claim 1, the display system further comprising:
an operation input information transmission unit for transmitting an information signal operated or input by a touch panel or an operation key of the portable display device,
wherein the controller includes a reception unit for receiving a signal from the operation input information transmission unit and controls the machine based on the signal received by the reception unit.

3. The display system for a machine according to claim 1, wherein the portable display device includes an interface for connecting an external storage unit.

4. The display system for a machine according to claim 1, wherein the portable display device and the controller exchange the connection request signal by wireless, the permission signal, the display data, and information stored in the external storage unit.

5. The display system for a machine according to claim 1, wherein the portable display device is a tablet terminal.

6. The display system for a machine according to claim 1, wherein the machine is any one of an electric discharge machine, an injection molding machine, and a working machine.
